Europäisches Patentamt

(19) European Patent Office

Office européen des brevets

(11) EP 0 563 885 B1

(12) # EUROPEAN PATENT SPECIFICATION

(45) Date of publication and mention
of the grant of the patent:
**29.12.1999 Bulletin 1999/52**

(51) Int. Cl.⁶: **B62D 7/15**, G01P 21/02

(21) Application number: **93105256.7**

(22) Date of filing: **30.03.1993**

(54) **Rear-wheel steering apparatus for vehicles with a yaw rate sensor and calibration means therefore, and method for calibrating a yaw rate sensor**

Hinterradlenkung für Kraftfahrzeuge mit Gierwinkelsensor und Kalibriermitteln dafür, und Verfahren zum Kalibrieren eines Gierwinkelsensors

Appareil de direction de roues arrières pour véhicules avec indicateur de lacet et moyens de calibrage pour ce-ci, et procédé de calibrage d'un indicateur de lacet

(84) Designated Contracting States:
**DE FR GB**

(30) Priority: **31.03.1992 JP 7738392**

(43) Date of publication of application:
**06.10.1993 Bulletin 1993/40**

(73) Proprietor:
**Mazda Motor Corporation
Aki-gun Hiroshima-ken (JP)**

(72) Inventor:
**Ohmura, Hiroshi,
c/o Mazda Motor Corporation
Aki-gun, Hiroshima-ken (JP)**

(74) Representative:
**Reinhard - Skuhra - Weise & Partner
Postfach 44 01 51
80750 München (DE)**

(56) References cited:
**EP-A- 0 471 299        WO-A-90/12698**

- **PATENT ABSTRACTS OF JAPAN vol. 012, no. 141 (M-691)28 April 1988 & JP-A-62 261 575 (TOYOTA MOTOR CORP) 13 November 1987**
- **PATENT ABSTRACTS OF JAPAN vol. 016, no. 051 (M-1209)10 February 1992 & JP-A-03 253 471 (MAZDA MOTOR CORP) 12 November 1991**
- **PATENT ABSTRACTS OF JAPAN vol. 016, no. 051 (M-1209)10 February 1992 & JP-A-03 253 470 (MAZDA MOTOR CORP) 12 November 1991**
- **PATENT ABSTRACTS OF JAPAN vol. 016, no. 051 (M-1209)10 February 1992 & JP-A-03 253 469 (MAZDA MOTOR CORP) 12 November 1991**
- **Bosch, Kraftfahrtechnisches Taschenbuch, VDI-Verlag Düsseldorf (DE), 21th edition 1991, page 106, "Drehzahl-/Geschwindigkeitssensoren"**

## Description

The present invention relates to a rear-wheel steering apparatus capable of detecting a change rate of revolved angle of a vehicle (hereinafter referred to as a "yaw rate signal") on a level surface and controlling the steering angle of the rear wheels based on the detected yaw rate signal. More particularly, it relates to calibration of the yaw rate sensor which detects a yaw rate signal.

Recently, a rear-wheel steering apparatus of "yaw rate feedback control" has been proposed in order to secure directional stability of vehicle. For example, in JP-A-2-249765, the disclosed apparatus is capable of detecting a yaw rate signal of the vehicle, and turning the rear wheels to a phase which is opposite to that of front wheels immediately after the control of the front wheels has started, and then to an in-phase side in accordance with occurrence of the yaw rate signal. Front (head) rotability and direction stability of vehicle body are balanced by this control.

EP-A-0 471 299 describes a vehicle control apparatus, wherein the vehicle behaviour during driving is correctly grasped by computing and map-retrieving from an output signal of an angular velocity sensor for detecting the angular velocity of the vehicle. A four-wheel-steering apparatus comprises a zero-point calculation means and an angular velocity correction means for calibration a yaw rate sensor.

WO-A-90/12698 describes an apparatus for measuring the yaw rate of the vehicle comprising means for measuring the velocity of the vehicle, means to measuring the lateral acceleration of the vehicle, means for measuring the steering angle of the vehicle, correction means and a yaw rate gyrometer. The yaw rate gyrometer is calibrated when the vehicle speed is zero and/or when both the steering angle and the lateral acceleration of the vehicle are zero.

Vehicle speed detectors ore known e.g. from Bosch, Kraftfahrtechnisches Taschenbuch, VDI-Verlag Düsseldorf, 21st edition 1991, page 106, "Drehzahl-/Geschwindigkeitssensoren".

From JP-A-62-261 575 a correcting device for assembled yaw rate is known. A cumulative means determines dislocation of assembled yaw rate from a reference value when a detection signal is given from a car stop condition sending means.

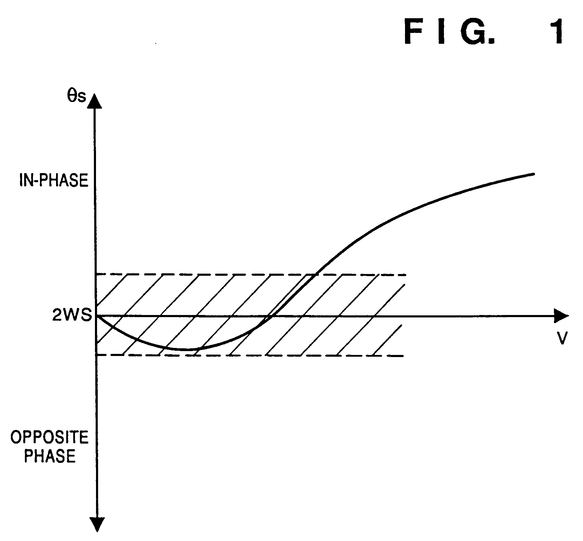

Fig. 1 shows the characteristics of change in a steering ration $\theta_s$ when the vehicle body is turned by the yaw rate type rear-wheel steering apparatus. As shown in Fig. 1, the steering-angle ratio appears in the opposite phase at beginning. The steering-angle ratio then swings to the in-phase. Since this change brings considerable effect to the movement of the vehicle, it is desirable that a yaw rate is detected accurately.

However, since the yaw rate sensor deals with a signal representing a change rate of the yaw rate signal, it is difficult to set a reference position physically.

Furthermore, in a general yaw rate sensor, the original point drifts, therefore, calibration is often required.

In the prior art, it has been considered that a yaw rate would not be generated when the vehicle speed is zero. Accordingly, a point where the speed sensor indicates "zero" is detected and the yaw rate sensor is calibrated so that the output of the yaw rate sensor at the detected time point is determined as an original point.

However, since a general speed sensor has a limitation in its accuracy, the speed "zero" may be outputted even when the actual vehicle speed is 2 km/h (that is, the vehicle is travelling at approximately 2 km/h). In the conventional method, calibration of the yaw rate sensor is performed when the speed sensor indicates "zero", even if the actual vehicle speed is not "zero" and yaw rate signals have been generated, the calibration is performed with the sensor output at that time as an original point of the yaw rate signal.

## SUMMARY OF THE INVENTION

Accordingly, it is an object of the present invention to suggest a rear-wheel steering apparatus capable of calibrating the yaw rate sensor so as to be accurate by detecting the time when the yaw rate is not generated.

According to the present invention, the foregoing object is attained by providing a rear-wheel steering apparatus having the features of claim 1 and a yaw rate sensor calibration method having the features of claim 5.

In the case where the steering angle is less than a predetermined value, even if the vehicle speed is not zero and the vehicle is actually moving, a yaw rate is not generated. An accurate calibration can be performed at that time.

Other features and advantages of the present invention will be apparent from the following description taken in conjunction with the accompanying drawings, in which like reference characters designate the same or similar parts throughout the figures thereof.

## BRIEF DESCRIPTION OF THE DRAWINGS

The accompanying drawings, which are incorporated and constitute a part of the specification, illustrate embodiments of the invention and, together with the description, serve to explain the principles of the invention.

Fig. 1 is a graph to explain the characteristics of steering-angle ratio of the rear-wheel steering control by yaw rate feedback control;

Fig. 2 is a diagram to explain the construction of four-wheel steering system of a preferable embodiment of the invention;

Fig. 3 is a diagram to explain the main portion of the rear-wheel steering apparatus of the embodiment indicated in Fig. 2;

Fig. 4 is a diagram to explain the main portion of the steering-angle-ratio adjustment mechanism of Fig. 2;

Fig. 5 is a diagram to explain the principle of the operation of the steering-angle-ratio adjustment mechanism of Fig. 4;

Fig. 6 is a diagram used to explain the reasons why the vehicle speed sensor is inaccurate; and

Fig. 7 is a flowchart illustrating the control procedure of the present embodiment.

DESCRIPTION OF THE PREFERRED EMBODIMENTS

Preferred embodiments of the present invention will now be described in detail in accordance with the accompanying drawings.

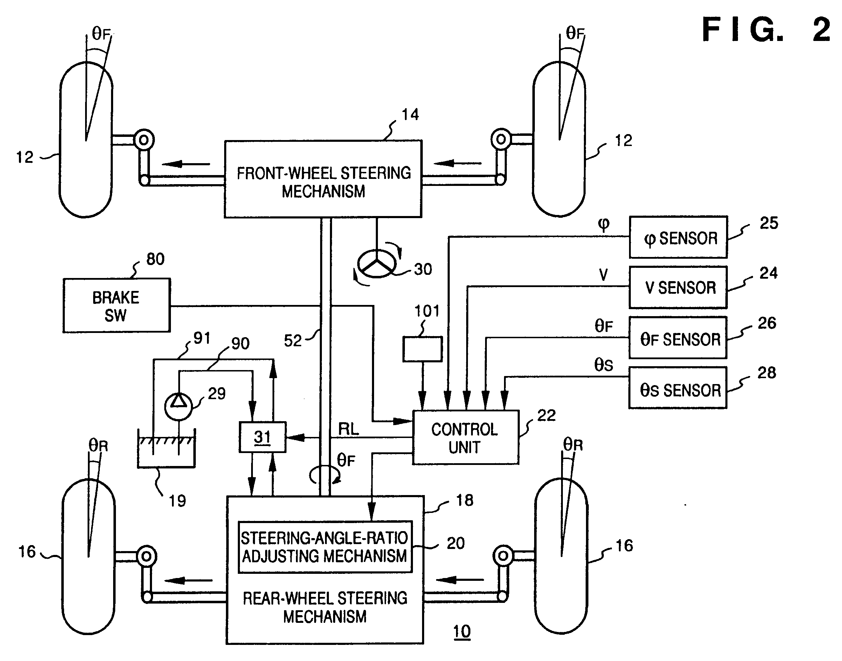

Fig. 2 illustrates the construction of the four-wheel steering system of the present embodiment.

As shown in Fig. 2, the rear-wheel steering apparatus 10 comprises a rear-wheel steering mechanism 18, steering-angle-ratio adjusting mechanism 20 for setting and adjusting a steering-angle ratio $\theta_S$, and control unit 22 for controlling the steering-angle-ratio adjusting mechanism 20. The rear-wheel steering mechanism 18 is functionally connected to a front-wheel steering mechanism 14 for steering front wheels 12 through a transfer shaft 52 and controls rear wheels 16 so that an angle becomes a predetermined target steering angle in accordance with the steering angle of the front-wheel steering angle $\theta_F$ which is inputted from the front-wheel steering mechanism 14. The steering-angle-ratio adjusting mechanism 20 is provided in the rear-wheel steering mechanism 18, and sets and adjusts the steering-angle ratio $\theta_S$ which is expressed as a ratio of the rear-wheel steering angle $\theta_R$ with respect to the front-wheel steering angle $\theta_F$. The control unit 22 inputs signals of a vehicle speed V from a speed sensor 24, front-wheel steering angle $\theta_F$ from a front-wheel steering sensor 26 (provided on the steering shaft), steering-angle-ratio $\theta_S$ from a steering-angle-ratio sensor 28, and yaw rate signal $\varphi$ from a yaw rate sensor 25.

As will be described later, in the present steering system, rear wheels are steered by hydraulic power. The source of supply for an oil pressure is a pump 29 of Fig. 2. The pump 29 transfers oil stored in an oil tank 19 to a hydraulic release circuit 31 through a pipe 90. The release circuit 31 is a circuit to let oil pressure out of the steering mechanism 18 so that the rear wheels are forced to return to the neutral position in case of a failure. Numeral 91 is a return pipe from the steering mechanism 18.

The steering-angle-ratio adjusting mechanism 20 is controlled in accordance with so-called "phase inversion" control of the control unit 22 so that the steering-angle-ratio $\theta_S$ becomes negative immediately after the front wheels are steered and it changes to positive later, when the front wheels are turned from the steering angle 0° in the intermediate speed and high speed regions.

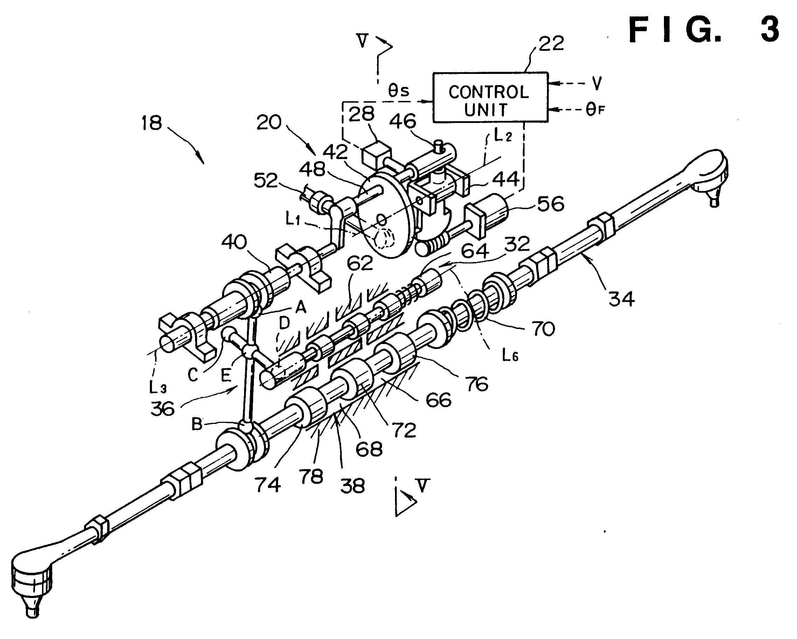

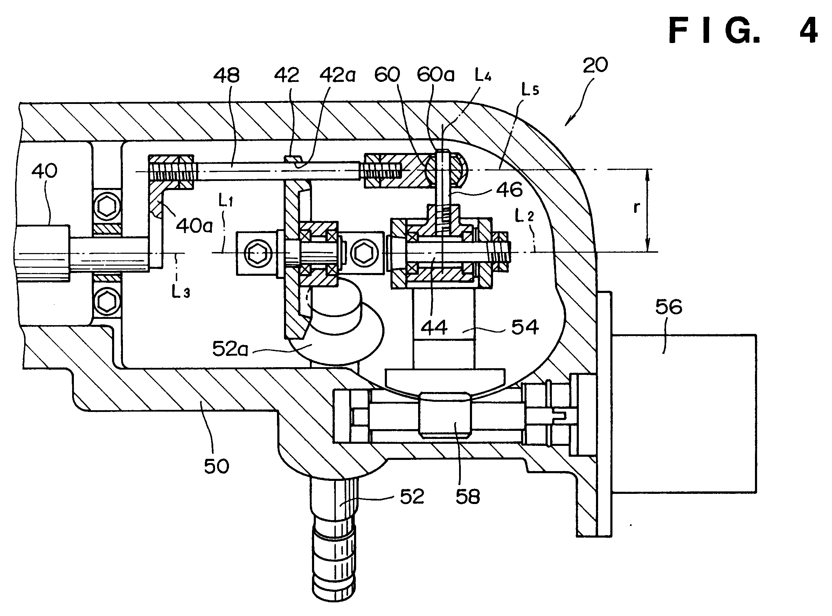

Fig. 3 is a perspective view illustrating the rear-wheel steering mechanism 18 and Fig. 4 is a detail of the steering-angle-ratio adjusting mechanism 20 of the rear-wheel steering mechanism 18 in a direction of V-V of Fig. 3.

As shown in Fig. 3, the rear-wheel steering mechanism 18 comprises the steering-angle-ratio adjusting mechanism 20, hydraulic switch valve 32, rear-wheel steering rod 34, displacement transfer mechanism 36, and hydraulic power cylinder 38.

The steering-angle-ratio adjusting mechanism 20 has an output rod 40, bevel gear 42, yaw shaft member 44, pendulum arm 46, and coupling rod 48. These are accommodated in a case 50 as shown in Fig. 4.

The output rod 40 is supported by the case 50 and capable of oscillating in the direction of axis $L_3$. The rear-wheel steering rod 34 is displaced in the direction of the axis $L_3$ (to the vehicle width) through the displacement transfer mechanism 36 by stroke displacement to the axis $L_3$. Accordingly, the rear wheels which connect to both ends of the rear-wheel steering rod 34 are steered.

The bevel gear 42 is supported by the case 50 and capable of rotating around the axis $L_3$ of the output rod 40 and axis $L_1$. It is arranged so that as a pinion 52a of an end portion of the transfer shaft 52 which engages with the bevel gear 42 rotates around the axis $L_1$ as the steering wheel 30 turns. That is, the front-wheel steering angle $\theta_F$ is inputted to the rear-wheel steering mechanism 18 through the transfer shaft 52 from the front-wheel steering mechanism 14.

The yaw shaft member 44 has an axis $L_2$ capable of locating on the same position as the axis $L_3$ of the output rod 40 and is fixed to a yawing gear 54. The gear 54 is engaged with a worm gear 58 which rotates by a servomotor 56 controlled by the control unit 22, and is rotated around a vertical axis which intersects with the axis $L_2$, thus making the yaw shaft member 44 rotate. That is, as apparent from the later description, the servomotor 56 can set the steering-angle-ratio variably in accordance with the position of rotated angle thereof.

The pendulum arm 46 is connected to the yaw shaft member 44 capable of yawing around the axis $L_2$ of the yaw shaft member 44 and a connecting position to the yaw shaft member 44 is determined so that the axis $L_4$ of the pendulum arm 46 crosses an intersection of the rotating axis and axis $L_2$ of the yaw shaft member 44.

The coupling rod 48 has an axis $L_5$ which is parallel to the axis $L_3$ of the output rod 40, and is connected to the output rod 40, bevel gear 42, and pendulum arm 46. The coupling rod 48 is connected to the output rod 40 by screwing one of ends of the coupling rod 48 to a lever 40a fixed at the end of the output rod 40. The connection to the bevel gear 42 is performed by connecting the other end of the coupling rod 48 to a hole 42a formed in the bevel gear 42 at the point in a distance r from the axis $L_1$ of the bevel gear 42. The connection to the pendulum arm 46 is performed by connecting the pendulum arm 46 to a hole 60a of ball joint member 60, capable of rotating in all directions, which is provided at the end of the coupling rod 48. Accordingly, the coupling rod 48 is fixed with respect to the output rod 40, but it is capable of oscillating in the direction of axis $L_5$ (that is, the direction of axis $L_3$) with respect to the bevel gear 42, and it is also capable of oscillating in the direction of the axis $L_4$ (that is, the direction which is perpendicular to the axis $L_3$ in the figure) with respect to the pendulum arm 46. Furthermore, the axis $L_4$ of the pendulum arm 46 inclines to the direction which is perpendicular to the axis $L_3$ by revolution of the yaw shaft member 44 and the pendulum arm 46 oscillates in this inclined direction. In this movement, an oscillating component in the direction which is perpendicular to the axis $L_3$ is included and a change of included angle of the axes $L_4$ and $L_5$ is absorbed by the rotative operation of the ball joint member 60. Accordingly, the component in the direction which is perpendicular to the axis $L_3$ in a force which is transferred to the coupling rod 48 from the pendulum arm 46 is absorbed in the above connecting point and a relative displacement in the above-described direction is enabled.

Accordingly, since connection between the pendulum arm 46 and coupling rod 48 in the steering-angle-ratio adjusting mechanism 20 can be arranged so as to be a relative displacement in the direction which is perpendicular to the axis $L_3$, a locus of the connecting point of the pendulum arm 46 and coupling rod 48 when the pendulum 46 is rotated is a circular locus or elliptical locus on outer circumferencial surface of the cylinder in which a radius is r with the axis $L_3$ as the center.

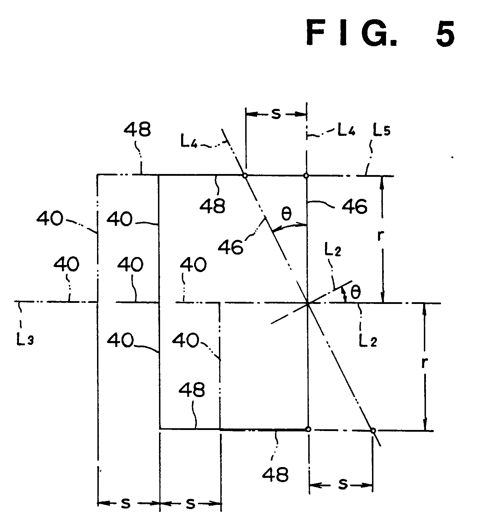

Fig. 5 is a diagram illustrating a displacement of the output rod 40 when the axis $L_2$ of the yaw shaft member 44 is inclined θ degree to the axis $L_3$ of the output rod 40 (that is, the axis $L_4$ of the pendulum arm 46 is inclined θ degree to the direction which is perpendicular to the axis $L_3$). As apparent from the diagram, even if the pendulum arm 46 is oscillated either in the direction to the right or left, if the amount of oscillation is the same, displacement of the connecting point of the output rod 40 and coupling rod 48 is respectively "S" to the axis $L_3$ and displacement of the output rod 40 is also "S" to the axis $L_3$ since the output rod 40 and coupling rod 48 are fixedly connected.

As described above, the displacement amounts of the output rod 40 to the left and right shown in Fig. 5 are respectively "S" if the oscillation amount of the pendulum arm 46 is equal to each other. However, the displacement "S" varies according to a degree of θ even if the steering amount of the handle is the same in the oscillation toward the right and left and the amount of rotation of the bevel gear 42 is the same in the oscillation toward the right and left. Therefore, the steering-angle-ratio $θ_S$ can be set and adjusted by setting and adjusting the inclination θ of the yaw shaft member 44 by the control of the servomotor 56. urthermore, the yaw shaft member 44 can be not only inclined in the counterclockwise direction, but also the clockwise direction. In such case, the oscillating direction of the output rod 40 with respect to the rotation of the bevel gear 42 is the opposite to the above case. Accordingly, the rear wheels can be steered to the in-phase or opposite phase with respect to the steering handle or front wheels.

The steering-angle-ratio $θ_S$ set and adjusted by the steering-angle-ratio adjusting mechanism 20 can be detected by the steering-angle-ratio sensor 28 provided in the yaw shaft member 44 based on the inclination θ.

The remaining units other than the steering-angle-ratio adjusting mechanism 20 in the rear-wheel steering mechanism 18 is described below.

The hydraulic switch valve 32 is comprised of a valve housing 62 and spool 64 which are adjustably accommodated in the housing 62 in the direction of the axis $L_6$ which is parallel to the axis $L_3$ of the output rod 40. The spool 64 is displaced by the output rod 40 and rear-wheel steering rod 34 through the displacement transfer mechanism 36. The displacement of the spool 64 controls to supply the oil pressure to the hydraulic power cylinder 38. That is, if the displacement is toward the right from the neutral position with respect to the valve housing 62, the oil pressure is supplied to a right oil chamber 66 of the hydraulic power cylinder 38, while if the displacement is toward the left, the oil pressure is supplied to the left oil chamber 68.

The above rear-wheel steering rod 34 is extended to the direction of vehicle width which is parallel to the axis $L_3$ of the rod 40, displaces to that direction, and steers the rear wheels connected to both ends of the rod 40 through a tie rod or knuckle arm which is not indicated in the figure. The above displacement is performed by the oil pressure in the hydraulic power cylinder 38. A centering spring 70 is provided with the rear-wheel steering rod 34. In the case where a hydraulic system comprising the hydraulic switch valve 32 and hydraulic power cylinder 38 is damaged or failed and the oil pressure in the hydraulic power cylinder 38 is lost, or in the case where the mechanical system of the rear-wheel steering apparatus 10 is damaged or failed and the oil pressure is let out of the hydraulic power cylinder 38 by releasing the hydraulic system to a drain, a fail-safe operation is performed by returning the rear-wheel steering rod 34 to the neutral position, by means of the centering spring 70 which positions the rod 34 to the position where the rear wheels are steered for straight drive.

The hydraulic power cylinder 38 displaces the rear-wheel steering rod 34 to the vehicle width by the hydraulic compressive force and a piston 72 is directly fixed on the rear-wheel steering rod 34 and sealing members 74 and 76 which form the left oil chamber 68 and right oil chamber 66 are provided on the right and left of the piston 72. The sealing members 74 and 76 are fixed on the housing 78 of the hydraulic power cylinder 38, but these are capable of oscillating with respect to the rear-wheel steering rod 34.

The displacement transfer mechanism 36 engages with the output rod 34, spool 64, and rear-wheel steering rod 34. The mechanism 36 is operated to the direction where the spool 64 is displaced to the predetermined direction by displacement amount of the output rod 40 and to the direction where the spool 64 is displaced to the opposite direction by displacement of the output rod 40.

That is, the displacement transfer mechanism 36 is comprised of a cross-shaped lever which has a vertical lever and lateral lever. The one end A of the vertical lever engages with the output rod 40 and the other end B engages with the rear-wheel steering rod 34. Furthermore, the one end C of the lateral lever engages with the case of the rear-wheel steering apparatus 10 fixed on the vehicle body and the other end D engages with the spool 64. The ends A, B, and D are respectively engaged with the output rod 40, rear-wheel steering rod 34, and spool 64 so that it is capable of oscillating in the direction of the axis, and that it is capable of oscillating and rotating in the other directions. The engaged end C is capable of rotating but incapable of moving by the ball joint.

When the output rod 40 is displaced by stroke displacement, it displaces the rear-wheel steering rod 34 to the axis $L_3$ through the displacement transfer mechanism 36. This operation turns the rear wheels which are connected to both ends of the rear-wheel steering rod 34. However, since the principle of the transfer operation of the amount of steering angle does not directly relate to the present invention and it is described in JP-A-1-273772, a detailed description is omitted here.

As described above, the rear-wheel steering apparatus 10 according to the present embodiment performs the phase inversion control by controlling the steering-angle-ratio adjusting mechanism 20 provided in the rear-wheel steering mechanism 18 which is mechanically connected to the front-wheel steering mechanism 14. When the front wheels 12 are at steering angle 0°, the rear wheels can be mechanically and accurately maintained at the steering angle 0°.

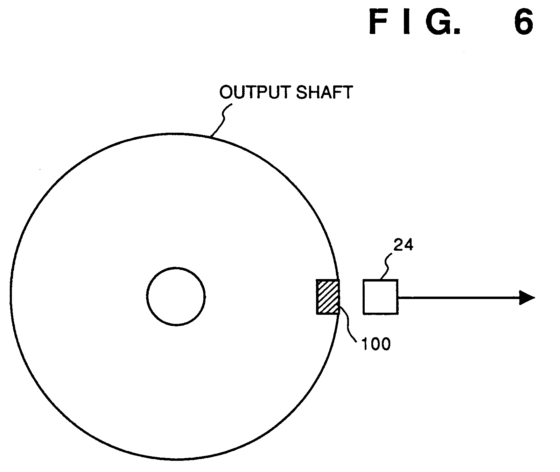

Fig. 6 is a diagram illustrating the construction of the speed sensor 24. As shown in the diagram, the speed sensor 24 is mounted with a member of the wheel or an output shaft of transmission so as to detect change of magnetic flux in a cut 100 placed in the member of the wheel or output shaft of the transmission. The characteristic is that the output of the magnetic flux change signal decreases when the number of evolution is small. Therefore, it is substantially impossible to detect the vehicle speed slower than 2 km/h. This causes inaccuracy in the calibration of the conventional yaw rate sensor. The following two facts are applied to this embodiment:

1. When the steering angle $\theta_F$ is small, a yaw rate signal is not generated even if the vehicle speed V is not zero. The steering angle sensor can easily set the original point because it is a position sensor. That is, when the steering angle $\theta_F$ is small, the vehicle must travel straight. Therefore, yaw rate signals are not generated.

2. In order to increase the accuracy of calibration, a condition where a brake switch 80 is being turned on is added to the fact that the calibration is excuted when $\theta_F = 0$ and V = 0. Since the vehicle speed is certainly "zero" when the brake is being applied.

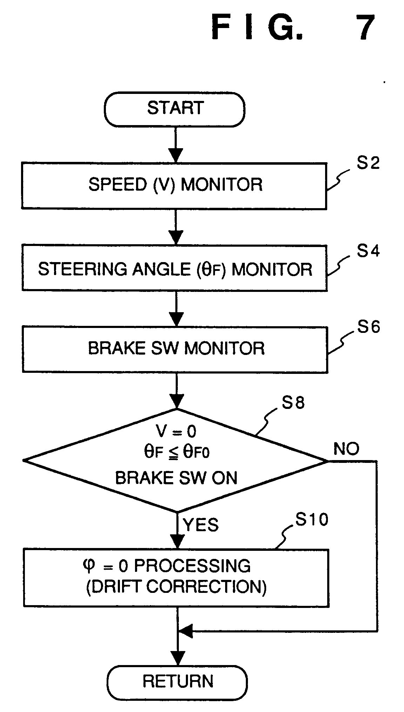

The flowchart of Fig. 7 shows an example of the control procedure in order to constitute the yaw rate sensor. The control procedure is a program driven when a switch 101 (Fig. 2) is pressed.

At step S2, the vehicle speed V from the sensor 24 is monitored. At step S4, a steering angle $\theta_F$ from the sensor 26 is monitored. At step S6, a state of the brake switch 80 is monitored. At step S8, it is judged whether or not the brake switch is on under the condition where the vehicle speed is zero and the steering angle $\theta_F$ is less than $\theta_{F0}$. When the judgement is YES, the yaw rate sensor 25 is calibrated at step S10. The output at that time can be determined as a reference value when the yaw rate signal is zero. For example, the yaw rate signal $\varphi$ is $\varphi_0$, $\varphi = \varphi_0$ is determined as the original point where the yaw rate is zero. After the calibration is performed, if the output of the yaw rate sensor indicates $\varphi_x$, $\varphi_x - \varphi_0$ is used for the rear-wheel steering control.

The present invention can be modified in various ways within the scope of the objects of this invention as defined in the appended claims.

Furthermore, in the above embodiment, the timing of calibration is set by an operator, however, this operation can be automated. That is, if the controller 22 automatically detects the timing which satisfies the condition of step S8 and performs calibration, the operator will not be bothered by the calibration operation.

In the case where the steering angle is less than a predetermined value, even if the vehicle speed is not zero and the vehicle is actually moving, a yaw rate is not generated.

According to an aspect of the present invention, since the vehicle speed is zero is assured when the brake switch is set to "on", the accuracy of calibration is improved.

**Claims**

1. A rear-wheel steering apparatus which controls the steering angle ($\theta_R$) of the rear wheels (16) of a vehicle by inputting a yaw rate signal ($\phi$) detected by a yaw rate sensor (25), a vehicle speed signal (v) detected by a vehicle speed detection means and a steering angle signal ($\Theta_F$) of the front wheels (12) detected by a steering angle sensor (26) as parameters,

wherein the vehicle speed detection means includes:

- a rotor member rotating in accordance with the rotation of a vehicle wheel, the rotor member having a cut (100) with a predetermined length in a rotational direction; and
- a vehicle speed sensor (24) positioned apart from the rotor member in the radial direction outputting the vehicle speed signal (V) when being crossed by the cut (100),

the rear wheel steering apparatus (10) further comprising:

- input means (80) detecting the fact that a brake is applied, and
- calibration means (S10) calibrating the yaw rate sensor (25) when the fact is detected that the brake is applied, under the condition where the vehicle speed signal (V) indicates that the vehicle speed is substantially zero and the steering angle signal ($\Theta_F$) of the front wheels (12) indicates that the steering angle is less than a predetermined value ($\Theta_{F0}$).

2. The rear-wheel steering apparatus according to claim 1, further comprising: an additional manual-operation switch for initiating calibration operation, wherein the calibration means starts to calibrate the yaw rate sensor in a case where the manual-operation switch is turned on.

3. The rear-wheel steering apparatus according to claim 1, wherein the predetermined value ($\Theta_{F0}$) for the steering angle ($\Theta_F$) of the front wheels (12) is set to a value when the steering wheel is at the substantially neutral position.

4. The rear-wheel steering apparatus according to claim 1, wherein the calibration means stores an output ($\phi_0$) of the yaw rate sensor (25) when being calibrated and outputs a calibrated yaw rate value obtained by subtracting the stored output ($\phi_0$) of the yaw rate sensor (25) from an instantaneous output value of the yaw rate sensor (25) during a normal period other than a period in which the yaw rate sensor is calibrated.

5. A yaw rate sensor calibration method for calibrating a yaw rate sensor (25) which is adapted to a rear-wheel steering apparatus which corrects a steering angle ($\Theta_R$) of the rear wheels (16) of a vehicle by inputting a yaw rate signal ($\phi$) as a parameter, comprising the steps of:

- detecting the fact that a brake is applied;
- detecting a vehicle speed (V);
- detecting a steering angle ($\Theta_F$) of the front wheels (12) of the vehicle; and
- calibrating the yaw rate sensor in a case where the fact is detected that the brake is applied, under the condition where the detected vehicle speed is substantially zero and the detected steering angle of the front wheels (12) is less than a predetermined value.

**Patentansprüche**

1. Hinterradlenkung, die den Lenkwinkel ($\theta_R$) der Hinterräder (16) eines Fahrzeuges durch Eingabe eines Gierwinkel-Verhältnissignals ($\phi$), das durch einen Gierraten-Sensor (25) erfasst wird, eines Fahrzeug-Geschwindigkeitsignals (v), das durch eine Fahrzeug-Geschwindigkeits-Erfassungseinrichtung erfasst wird, und eines Lenkwinkelsignals ($\theta_F$) der Vorderräder (12), das durch einen Lenkwinkelsensor (26) erfasst wird, als Parameter steuert,

wobei die Fahrzeug-Geschwindigkeits-Erfassungseinrichtung aufweist:

ein Rotor-Bauelement, das sich entsprechend der Drehung eines Fahrzeugrades dreht, wobei das Rotor-Bauelement eine Einkerbung (100) mit einer vorbestimmten Länge in Drehrichtung aufweist; und einen Fahrzeug-Geschwindigkeitsensor (24), der getrennt von dem Rotor-Bauelement in radialer Richtung zur Abgabe des Fahrzeug-Geschwindigkeitsignals(v) positioniert ist, wenn er von der Einkerbung (100) passiert wird,

wobei die Hinterradsteuerung (10) ferner aufweist:

eine Eingabeeinrichtung (80) zur Erfassung der Tatsache, daß eine Bremse angelegt wird, und eine Kalibriereinrichtung (S10) zur Kalibrierung des Gierraten-Sensors (25), wenn die Tatsache erfasst wird, daß die Bremse angelegt wird, unter der Bedingung, daß das Geschwindigkeitsignal (v) angibt, daß die Fahrzeuggeschwindigkeit im wesentlichen null ist, und das Lenkwinkelsignal ($\theta_F$) der Vorderräder (12) angibt, daß der Lenkwinkel weniger als einen vorbestimmten Wert ($\theta_{F0}$) beträgt.

2. Hinterradsteuerung nach Anspruch 1, welche ferner aufweist: einen zusätzlichen manuell bedienbaren Schalter zum Starten einer Kalibrieroperation, wobei die Kalibriereinrichtung damit beginnt den Gierraten-Sensor zu kalibrieren, wenn der manuell bedienbare Schalter angeschaltet wird.

3. Hinterradsteuerung nach Anspruch 1, bei der der vorbestimmte Wert ($\theta_{F0}$) für den Lenkwinkel ($\theta_F$) der Vorderräder (12) auf einen Wert eingestellt wird, wenn das Lenkrad sich im wesentlichen in der neutralen Stellung befindet.

4. Hinterradsteuerung nach Anspruch 1, bei der die Kalibriereinrichtung ein Ausgangssignal ($\theta_0$) des GierratenSensors (25) abspeichert, wenn sie kalibriert ist, und einen kalibrierten Gierraten-Wert abgibt, der durch Subtraktion des abgespeicherten Ausgangssignals ($\theta_0$) des Gierraten-Sensors (25) von einem unmittelbaren Ausgangswert des Gierraten-Sensors (25) während einer normalen Zeitperiode erhalten wird, wobei es sich bei der normalen Zeitperiode nicht um diejenige Zeitperiode handelt, in welcher der Gierraten-Sensor kalibriert wird.

5. Gierraten-Sensor-Kalibrierverfahren zum Kalibrieren eines Gierraten-Sensors (25), welches sich für eine Hinterradsteuerung eignet, die einen Lenkwinkel ($\theta_R$) der Hinterräder (16) eines Fahrzeugs durch Eingabe eines Gierratensignals ($\theta$) als einen Parameter korrigiert, wobei das Verfahren die folgenden Schritte aufweist:

    Erfassen der Tatsache, daß eine Bremse angelegt wird;
    Erfassen der Fahrzeuggeschwindigkeit (V);
    Erfassen eines Lenkwinkels ($\theta_F$) der Vorderräder (12) des Fahrzeuges; und
    Kalibrieren des Gierraten-Sensors, wenn die Tatsache erfasst wird, daß die Bremse angelegt ist, unter der Bedingung, daß die erfasste Fahrzeuggeschwindigkeit im wesentlichen null ist und der erfasste Lenkwinkel der Vorderräder (12) weniger als einen vorbestimmten Wert beträgt.

**Revendications**

1. Dispositif de direction de roue arrière commandant l'angle de direction ($\theta_R$) des roues arrière (16) d'un véhicule par entrée d'un signal ($\phi$) de taux de lacet détecté par un capteur de taux de lacet (25), d'un signal (v) de vitesse de véhicule détecté par des moyens de détection de vitesse de véhicule et d'un signal d'angle de direction ($\theta_F$) des roues avant (12) détecté par un capteur d'angle de direction (26) en tant que paramètres,
dans lequel les moyens de détection de vitesse de véhicule comprennent :

- un organe formant rotor tournant en fonction de la rotation d'une roue de véhicule, l'organe formant rotor comportant une découpe (100) avec une longueur prédéterminée dans une direction rotationnelle ; et
- un capteur de vitesse de véhicule (24) placé à l'écart de l'organe formant rotor dans la direction radiale émettant le signal de vitesse de véhicule (V) quand il est intersecté par la découpe (100),

le dispositif de direction de roues arrière (10) comprenant de plus :

- des moyens d'entrée (80) détectant le fait qu'un freinage est appliqué, et
- des moyens de calibration (S) calibrant le capteur (25) de taux de lacet lorsqu'il est détecté que le freinage est appliqué, sous la condition que le signal (V) de vitesse de véhicule indique que la vitesse de véhicule est sensiblement zéro et le signal d'angle de direction ($\theta_F$) des roues avant (12) indique que l'angle de direction est inférieur à une valeur prédéterminée ($\theta_{F0}$).

2. Dispositif de direction de roue arrière selon la revendication 1, comprenant de plus : un contacteur supplémentaire d'opération manuelle pour initialiser l'opération de calibration, dans lequel les moyens de calibration commencent à calibrer le capteur de taux de lacet dans un cas où le contacteur d'opération manuelle est actionné.

3. Dispositif de direction de roue arrière selon la revendication 1, dans lequel la valeur prédéterminée ($\theta_{F0}$) pour l'angle de direction ($\theta_F$) des roues avant (12) est réglé à une valeur lorsque la roue de direction est à la position sensiblement neutre.

4. Dispositif de direction de roue arrière selon la revendication 1, dans lequel les moyens de calibration stockent une sortie ($\phi_0$) du capteur (25) de taux de lacets lorsqu'ils sont calibrés et émet une valeur de taux de lacet calibrée obtenue par soustraction de la sortie stockée ($\phi_0$) du capteur de taux de lacet (25) d'une valeur de sortie instantanée du capteur de taux de lacet (25) pendant une période normale autre que la période au cours de laquelle le capteur de taux de lacet est calibré.

5. Procédé de calibration de capteur de taux de lacet pour calibrer un capteur de taux de lacet (25) qui est adapté à un dispositif de direction de roue arrière qui corrige un angle de direction ($\theta_R$) des roues arrière (16) d'un véhicule par entrée d'un signal de taux de lacet ($\phi$) en tant que paramètre, comprenant les étapes de :

- détection du fait qu'un freinage est appliqué ;
- détection d'une vitesse de véhicule (V) ;
- détection d'un angle de direction ($\theta_F$) des roues avant (12) du véhicule ; et
- calibration du capteur de taux de lacet dans un cas où il est détecté que le freinage est appliqué, sous la condition que la vitesse de véhicule détectée est sensiblement nulle et l'angle de direction détecté des roues avant (12) est inférieur à la valeur prédéterminée.

# F I G. 1

FIG. 2

FRONT-WHEEL STEERING MECHANISM — 14

φ SENSOR — 25

V SENSOR — 24

θF SENSOR — 26

θS SENSOR — 28

BRAKE SW — 80

CONTROL UNIT — 22

STEERING-ANGLE-RATIO ADJUSTING MECHANISM — 18

REAR-WHEEL STEERING MECHANISM — 20

EP 0 563 885 B1

FIG. 3

CONTROL UNIT

EP 0 563 885 B1

F I G. 4

# F I G.  5

# F I G. 6

OUTPUT SHAFT

24

100

# F I G. 7

```
          ┌─────────────────┐
          │      START       │
          └─────────────────┘
                   │
                   ▼
    ┌─────────────────────────────┐   S2
    │     SPEED (V) MONITOR        │
    └─────────────────────────────┘
                   │
                   ▼
    ┌─────────────────────────────┐   S4
    │ STEERING ANGLE (θF) MONITOR  │
    └─────────────────────────────┘
                   │
                   ▼
    ┌─────────────────────────────┐   S6
    │     BRAKE SW MONITOR         │
    └─────────────────────────────┘
                   │
                   ▼
              ╱          ╲          S8
           ╱     V = 0      ╲
          ╱   θF ≦ θF0        ╲    NO
          ╲   BRAKE SW ON     ╱────────┐
           ╲               ╱           │
              ╲  YES   ╱               │
                 │                     │
                 ▼            S10      │
    ┌─────────────────────────────┐    │
    │    φ = 0 PROCESSING          │    │
    │   (DRIFT CORRECTION)         │    │
    └─────────────────────────────┘    │
                   │                   │
                   ◄───────────────────┘
                   ▼
          ┌─────────────────┐
          │     RETURN       │
          └─────────────────┘
```